# EUROPEAN PATENT APPLICATION

(11) **EP 1 162 612 A2**
(43) Date of publication of application: **12.12.2001**
(21) Application number: 01113746.0
(22) Date of filing: 05.06.2001
(51) Int. Cl.: G11B 7/24

(54) **Optical recording medium and optical recording method**

(30) Priority: 06.06.2000 JP 2000169202
(71) Applicant: Fuji Photo Film Co., Ltd., Kanagawa-ken (JP)
(72) Inventor: Ishimaru, Shingo, Minami-Ashigara-shi, Kanagawa (JP); Tadakuma, Yoshio, Minami-Ashigara-shi, Kanagawa (JP); Ogawa, Keizo, Minami-Ashigara-shi, Kanagawa (JP); Waki, Koukichi, Minami-Ashigara-shi, Kanagawa (JP); Usami, Yoshihisa, Odawara-shi, Kanagawa (JP)
(74) Representative: Klunker . Schmitt-Nilson . Hirsch

(57) **Abstract**

An optical recording medium comprises a recording layer containing, as a photoresponsive material, metal chalcogenide nanoparticles, wherein the metal chalcogenide nanoparticles have an average particle size of 1 to 20 nm and have a surface modified with an adsorbable compound.

## Description

### Background of the Invention

### 1. Field of the Invention

This invention relates to application of chemically synthesized nanoparticles of a metal chalcogenide as a photoresponsive recording material of optical recording media represented by optical disks. The terminology "nanoparticles" as used herein refers to ultrafine particles whose average particle size ranges from 1 nm to 20 nm.

### 2. Description of the Related Art

Optical recording materials have been gaining in density and sensitivity. Laser light having a wavelength of 600 nm or longer has been employed for optical recording and reproduction, and optical recording media have conventionally been designed to exhibit their optimal performance within this wavelength region. It is well known that reduction of light wavelength to one-nth brings an information recording density multiplied by n². Therefore it has been keenly demanded to realize high-density recording with a short wavelength laser of about 400 nm. According as the wavelength is shortened for a higher recording density, the demands for further increases in density and sensitivity of recording media have been increasing. In the light of these circumstances, it is an object of the present invention to provide a recording material of ultrahigh-density optical recording media fit for recording and reproducing with a short wavelength laser beam of 600 nm or less.

Relevant technologies using ultrafine particles that have hitherto been disclosed include use of ultrafine particles of semiconductors, such as Ge or Si, having a particle size distribution which are formed by sputtering (see JP-A-5-62239). This technique aims at multiple-wavelength recording by making use of difference in quantum size effect of ultrafine particles having different sizes in order to improve recording density without relying on reduction of laser wavelength or increase of numerical aperture (NA). It is therefore fundamentally different from the present invention which takes advantage of total phase change of nanoparticles of uniform size in an energy irradiated area.

JP-A-10-261244 discloses an optical recording medium comprising a substrate having a fine uneven pattern on its surface and a recording layer formed on the patterned substrate by sputtering, in which the recording layer comprises a chalcogen compound having dispersed therein fine metal particles or fine noble metal particles or the recording layer comprises a dielectric material having dispersed therein composite fine particles of a noble metal and a chalcogen compound. Involving the step for forming a fine pattern, the technique requires a complicated production process and has poor practicability.

Besides, thin film formation by sputtering, while having the merits of a dry process and allowing freedom of film composition designing, meets difficulties in controlling the particle size, particle size distribution and structure of the formed particles and dispersing the particles in a binder or a dielectric medium as compared with the particles formed by a colloid process. Such difficulties lead to difficulty in improving distinguishability between recorded areas and non-recorded areas, down-sizing of the recordable area, and stability of the recording material.

A technique of forming magnetic nanocrystals of a metal, an intermetallic compound or an alloy by a reduction process is taught in JP-A-12-54012, which is not relevant to the present invention contemplating preparation of a metal chalcogenide.

A thin film of a material included under the scope of the present invention can be formed by CVD as well as sputtering and reduction as noted above. For example, formation of an AgInTe₂ thin film by CVD is disclosed in JP-A-3-82593. However, the proposed process requires a substrate to be kept at or above 100°C. Such a high temperature is hardly applicable to a substrate of polymers such as polycarbonate resins. It is an additional problem that the film formation by CVD takes times.

The concept that a heat-resistant matrix having an ultrafine particulate substance dispersed therein could be an optical recording layer appeared in Japanese Patent 2908826, but the Patent has no mention of a specific process of making such a recording layer. Such a film structure has generally been made by a process comprising injecting a recording material into a heat-resistant matrix in a supersaturated state by sputtering and causing the injected material to precipitate by, for example, annealing. There is no literature teaching a process in which a recording material is made dispersible as a colloid by modifying the surface of ultrafine particles of the material. The Patent also refers to a wet process (a sol-gel process), but the description without specific teaching would be no more than general.

JP-A-3-231890 proposes firing after spraying or spin coating to make a recording layer comprising an InCuSe₂ alloy, which cannot be seen as practical in view of accuracy in production and heat resistance of a substrate.

### Summary of the Invention

Accordingly, an object of the present invention is to provide an optical recording medium which is capable of recording, reproducing or erasing information with a laser beam of 600 nm or shorter wavelength thereby to achieve a high density and which has a recording layer formed by applying colloidal nanoparticles by spin coating or web coating and thereby accomplishing an increased density and an heightened sensitivity.

The above object of the invention is achieved. by the following means.
(1) An optical recording medium having a recording layer containing, as a photoresponsive material, metal chalcogenide nanoparticles having an average particle size of 1 to 20 nm and having the surface thereof modified with an adsorbable compound. The recording layer undergoes phase change to change its optical constant, e.g., a reflectance, on being irradiated.
(2) The optical recording medium according to (1), wherein the recording layer is a layer formed by applying a colloidal dispersion of the metal chalcogenide nanoparticles that are prepared by chemical synthesis.
(3) The optical recording medium according to (1) or (2), wherein the metal chalcogenide nanoparticles comprise (A) at least one element selected from the elements of the groups 8, 1B and 2B and the 4th to 6th periods of the groups 3B, 4B and 5B in the Periodic Table and (B) at least one element selected from the elements of the group 6B in the Periodic Table.
(4) The optical recording medium according to (1) to (3), wherein the colloidal dispersion is prepared by the steps of:
   (i) mixing a precursor solution containing at least one element selected from the elements of the groups 8, 1B and 2B and the 4th to 6th periods of the groups 3B, 4B and 5B of the Periodic Table and a precursor solution containing at least one element selected from the group 6B elements in a high-boiling organic solvent at 100 to 360°C in an inert gas atmosphere to cause the precursors to react with each other to form nanoparticles,
   (ii) adding a flocculant to the reaction mixture obtained in step (1) to flocculate (aggregate) and precipitate the nanoparticles and separating the flocculate (aggregate) from the supernatant liquor,
   (iii) re-dispersing the flocculate collected in step (2) in an organic solvent, and
   (iv) repeating precipitation-flocculation and re-dispersion to remove precursor-forming organic matter and the high-boiling organic solvent while holding the high-boiling organic solvent molecule adsorbed to the nanoparticles to such an extent that the flocculate of the nanoparticles may be re-dispersed in an organic solvent.
(5) The optical recording medium according to (1) to (4), wherein the nanoparticles are crystalline.
(6) The optical recording medium according to (1) to (5), which comprises a substrate having thereon a first dielectric protective layer, the recording layer, and a second dielectric protective layer in this order.
(7) The optical recording medium according to (1) to (6), which is of rewritable type capable of recording, reproducing and erasing information through changes in reflectance of the recording layer, which are made by irradiating the nanoparticles with first light energy to make them amorphous (in an amorphous state) and irradiating with second light energy that is smaller than the first light energy to make them crystalline (in a crystalline state).
(8) The optical recording medium according to (1), which is of write once type capable of recording information through a change in reflectance of the recording layer which is made by an irreversible phase change caused in the nanoparticles and/or the vicinities thereof by giving light energy.
(9) A method of optical recording comprising irradiating the optical recording medium according to (1) with a semiconductor laser beam having an oscillation wavelength ranging from 200 to 600 nm.

### Detailed Description of the Invention

The nanoparticles which can be used in the invention have an average particle size of 1 to 20 nm, preferably 1 to 10 nm, still preferably 1 to 5 nm. Particles greater than 20 nm have an increased melting point to be slow in phase change. The lower limit of the particle size is selected according to the practical performance requirements such as weatherability. It is preferred that the nanoparticles be mono-dispersed particles for securing distinguishability between recorded areas and non-recorded areas. The "mono-dispersed" particles preferably have a particle size distribution with a coefficient of variation of 30% or smaller, still preferably 20% or smaller, particularly preferably 10% or less.

In order to obtain the recording layer of the invention which comprises a nanoparticle dispersion, it is important to modify the surface of the nanoparticles with an adsorbable compound. The term "adsorbable compound" as used herein denotes a compound having a group capable of being adsorbed. Effective adsorbable compounds include alkylphosphine oxides, alkylphosphines, and compounds containing -SH, -CN, -NH₂, -SO₂OH, -SOOH, -OPO(OH)₂ or -COOH, with alkylphosphine oxides and -SH-containing compounds being preferred. The alkyl group in the alkylphosphine oxides and alkylphosphines is preferably a trioctyl group or a tributyl group. A thin film formed by aggregation of such surface-modified (i.e., dispersed) fine particles can never be obtained by sputtering or vacuum deposition techniques.

The nanoparticle colloid is applied to a substrate by spin coating or web coating. Compared with dry processes, such wet coating realizes reduction in initial investment and production cost.

The metal chalcogenides which can be used in the present invention comprise (A) at least one element selected from the group consisting of the elements of the groups 8, 1B and 2B and the elements of the 4th to 6th periods of the groups 3B, 4B and 5B and (B) at least one element selected from the group 6B elements. Examples of the metal chalcogenides are GeSbTe, AgInSbTe, GeTe, Ag₂Te, AgInTe₂, AgSbTe₂, CuInSe₂, CuInTe₂, AgSbTe, InSbTe, GeTeS, GeSeS, GeSeSb, GeAsSe, InTe, SeTe, SeAs, GeTeAu, GeTeSeSb, GeTeSnAu, GeTePb, and GeTeSbS. In particular, GeSbTe, AgInSbTe, GeTe, Ag₂Te, AgInTe₂, AgSbTe₂, CuInSe₂ or CuInTe₂ is preferred. While the atomic ratios in the above chemical formulae are represented by integers, they may be deviated from integer ratios so as to modify the recording characteristics, preservability, strength, and the like as desired.

The metal chalcogenide nanoparticles can be synthesized by adding precursor solutions separating containing the element (A) and the element (B) (i.e., a chalcogen) in the form of ultrafine particles of a simple substance or its salt in an alkylphosphine, etc. to a high-boiling organic solvent, such as an alkylphosphine oxide, and allowing the precursors to react at a temperature ranging from 100°C to 350°C. The term "precursor" as used herein means a reactive substance containing the element which is necessary to form the metal chalcogenide. In the reaction, a precursor containing the element (s) (A) and a precursor containing the element(s) (B) are used.

The terminology "precursor-forming organic matter" as used herein indicates organic substances used to form the precursors, such as organic solvents.

The alkylphosphine includes symmetric tertiary phosphines, such as tributylphosphine, trioctylphosphine, and triphenylphosphine; asymmetric phosphines, such as dimethylbutylphosphine and dimethyloctylphosphine; and mixtures thereof. Preferred of them are tributylphosphine (TBP) and trioctylphosphine (TOP). These alkylphosphines may have appropriate functional groups (of which the examples are those described below with respect to hydrocarbons solvents).

The high-boiling organic solvents include alkylphosphine oxides, straight-chain or branched hydrocarbons (usually having 8 to 22 carbon atoms) or fluorocarbons having a functional group modifying the surface of the nanoparticles (e.g., -SH, -SO₂OH, -SOOH, -PO(OH)₂, -COOH). In addition didecyl ether, didodecyl ether, phenyl ether, and n-octyl ether are also preferably used. The alkylphosphine oxides include tributylphosphine oxide, trioctylphosphine oxide (TOPO), and dibutyloctylphosphine oxide, with TOPO being the most preferred.

The reaction between the solution of a precursor containing the element(s) (A) and the solution of a precursor containing the element(s) (B) in the above-specified temperature range (100 to 350°C) is preferably carried out in an inert gas atmosphere. The total number of moles of the elements (B) is preferably 0.001% to 0.5%, still preferably 0.005% to 0.2%, based on the weight of the high-boiling organic solvent. If the reaction temperature is lower than 100°C, or if the element (B) concentration is lower than 0.001%, the reaction has a very low rate in particle formation or tends to fail to form nanoparticles. At higher temperatures or in higher concentrations, coarse particles tend to be formed, or the formed particles tend to aggregate, resulting in a failure to re-disperse.

The nanoparticles thus formed in the reaction mixture are precipitated and flocculated by addition of a flocculant. Methanol or ethanol is usually added as a flocculant. The supernatant liquor is removed by decantation, and the resulting nanoparticles are re-dispersed in a solvent, such as an aprotic hydrocarbon (e.g., n-hexane). The surface modifier for the nanoparticles can be added to the preparation system in any stage of from nanoparticle formation up to purification of the particles .

It is preferred that the nanoparticles be crystalline. In most cases, the above-described reaction system provides fine crystals. This is of extreme significance for reducing the number of steps involved and the cost incurred in the production of optical recording media, as is recognized from the fact that JP-A-8-221814 proposes an optical recording material which is formed into a film by sputtering and calls for no initialization (crystallization). Where the nanoparticles obtained have insufficient crystallinity, they can be initialized with a bulk laser as is well known in the art.

The optical recording medium of the invention which is of rewritable type preferably comprises a substrate having thereon a first dielectric protective layer, the recording layer, and a second dielectric protective layer in this order. According to necessity, it can have a reflective layer and a protective layer. Where the recording medium is of the type in which a write beam or a read beam is incident upon the substrate side, it is preferred to provide on the substrate the first dielectric protective layer, the recording layer, the second dielectric protective layer, the reflective layer, and the protective layer in the order described. An intermediate layer may be provided between the substrate and the first dielectric layer, between the dielectric layer and the recording layer, between the second dielectric layer and the reflective layer, or between the reflective layer and the protective layer. Where the recording medium is of the type in which a write beam and a read beam are incident on the side opposite to the substrate, it is preferred to provide on the substrate the reflective layer, the first dielectric protective layer, the recording layer, the second dielectric protective layer, and the protective layer in the order described. An intermediate layer may be provided between the substrate and the reflective layer, between the reflective layer and the first dielectric layer, between the dielectric layer and the recording layer, or between the second dielectric layer and the protective layer. The intermediate layer may be provided in one or more of the above-described positions. Each of the layers constituting the recording medium may have a multilayer structure.

While related to the particle size of the ultrafine particles, the thickness of the recording layer can range from 5 to 300 nm, usually from 5 to 200 nm, preferably from 5 to 100 nm, still preferably from 5 to 50 nm. The recording layer can contain non-decomposing organic binders, such as fluorine-containing polymers or silicone polymers, or nanoparticles of dielectric substances, such as ZnS, SiO₂, and TiO₂, to improve the physical strength or durability to repetition of recording and reproduction.

The dielectric protective layer comprises at least one dielectric, such as ZnS, SiO₂, TiO₂, Al₂O₃, AlN, SiC, silicon nitride, MgF₂, CaF₂, LiF₂, SiO, Si₃N₄, ZnO, MgO, CeO, SiC, ZrO, ZrO₂, Nb₂O₅, SnO₂, In₂O₃, TiN, BN, ZrN, In₂S₃, TaS₄, TaC, B₄C, WC, TiC, and ZrC. ZnS, SiO₂, TiO₂, Al₂O₃, AlN, SiC, silicon nitride, MgF₂, CaF₂, LiF₂, SiO, and Si₃N₄ are still preferred dielectrics. A mixture of ZnS and SiO₂ is the most preferred. The first and the second dielectric protective layers each preferably have a thickness of 10 to 200 nm. Where a write beam and a read beam are incident on the substrate side, the first dielectric protective layer and the second dielectric protective layer preferably have a thickness of 30 to 150 nm and 10 to 100 nm, respectively. Where a write beam and a read beam are incident on the opposite side, the first dielectric protective layer and the second dielectric protective layer preferably have a thickness of 10 to 100 nm and 30 to 150 nm, respectively.

The reflective layer can be made of a singlemetal substance having a high reflectance, such as Au, Ag, Al, Pt or Cu, or an alloy comprising one or more of these metals. Ag, Al or an Ag-or Al-based alloy are preferred. The thickness of the reflective layer is preferably 30 to 300 nm, still preferably 50 to 200 nm. The material used to form the reflective layer or the dielectric layers can also be formed into a nanoparticle colloid dispersion, which is applied by coating.

The protective layer which is provided on the reflective layer is made of inorganic substances, such as SiO, SiO₂, MgF₂, SnO₂, and Si₃N₄, or organic substances, such as thermoplastic resins, thermosetting resins, and ultraviolet (UV)-curing resins, preferably resins. A heat-insulating protective layer can be provided between the recording layer and the reflective layer.

The protective layer can be formed by superposing a film, for example, an extruded plastic film, on the reflective layer and/or the substrate via an adhesive layer or by applying a protective material by, for example, vacuum evaporation, sputtering or coating. In using a thermoplastic resin or a thermosetting resin as a protective material, the protective layer can also be formed by applying a resin solution in an appropriate solvent followed by drying to remove the solvent. In using a UV-curing resin, it is applied as such or as dissolved in an appropriate solvent followed by UV irradiation to form a cured resin protective layer. If desired, the coating composition for the protective layer may contain various additives such as antistatic agents, antioxidants and UV absorbers. Where a write beam and a read beam are incident on the substrate side, the protective layer preferably has a thickness of 0.1 to 100 µm, particularly 1 to 50 µm, especially 2 to 20 µm. Where the beams are incident on the opposite side, the protective layer preferably has a thickness of 1 to 300 µm, particularly 10 to 200 µm, especially 50 to 150 µm.

A pair of the thus obtained recording disks composed of the substrate having thereon the recording layer and the dielectric layers and, if desired, the reflective layer, the protective layer, etc. can be joined together via an adhesive, etc. with their recording layers inside to give an optical recording medium having two recording layers. Further, the above-obtained recording disk can be joined with a protective disk of the same size via an adhesive, etc. with the recording layer inside to prepare an optical recording disk having a recording layer on one side thereof. The joining can be effected with a UV-curing resin useful as the protective layer or any synthetic adhesive. A double-sided adhesive tape is also effective. The adhesive layer usually has a thickness of 0.1 to 100 µm, preferably 5 to 80 µm.

The optical recording medium according to the invention is also useful as a write once type optically recording medium. Any structure of conventional write once recording media can be adopted, in which the nanoparticles of the invention are used in the recording layer.

It is convenient for information management to label an optical recording medium with titles or designs indicating the contents of the recorded information. For this the side of the recording medium opposite to the beam-incident side should have a surface suited to such labeling. In recent years, ink jet printers are commonly used for printing labels . When a surface of an optical recording medium is to be printed with an ink jet printer, the surface is required to be hydrophilic because aqueous ink is used in ink jet printers. Generally having a hydrophobic surface, the surface of the optical recording medium to be printed must be subjected to a surface treatment to get hydrophilic, i.e., ink-receptive. Various proposals have been made as for optical recording media with a hydrophilic printable surface layer as disclosed, e.g., in JP-A-7-169700 and JP-A-10-162438. Such a hydrophilic surface layer can be provided on the optical recordingmedium of the invention. In this case, it is advantageous that the hydrophilic surface layer is formed of a layer comprising a UV-curing resin as a binder having dispersed therein particles of hydrophilic organic polymers, such as protein particles.

According to the present invention, high-density recording can be accomplished by using a laser beam having a wavelength selected from a range of 200 nm to 600 nm, preferably a wavelength of 500 nm or shorter, particularly preferably 430 nm or shorter. That is, a blue-purple laser and a laser beam modulated with a second harmonic generation (SHG) element to have shorter wavelengths can be used for writing and reading.

The present invention will now be illustrated in greater detail with reference to Examples, but it should be understood that the invention is not construed as being limited thereto.

### EXAMPLE 1

### Preparation of Ag₂Te nanoparticle colloid:

Te was dissolved in TOP to prepare a 1M solution (hereinafter Te-TOP). AgCl was dissolved in purified TOP to prepare a 1M solution (hereinafter Ag-TOP). In an inert gas atmosphere 100 g of TOPO was melted by heating at 140°C, and 20 cc of Ag-TOP and 10 cc of Te-TOP were added thereto while vigorously stirring (mole number of Te/weight of TOPO=0.01%). The reaction was continued for 20 minutes with vigorous stirring. The resulting nanoparticles had an average particle size of 8 nm, and the coefficient of size variation was as astonishingly small as 5%. One liter of methanol was added to the reaction mixture to flocculate the particles, which were collected and re-dispersed in 100 cc of toluene. Flocculation and re-dispersion were repeated several times to complete purification. After drying, the particles were dispersed in n-hexane to prepare a 0.5 g/cc dispersion (hereinafter C-1a).

When the above-described procedures were repeated, except that the Te mole number/TOPO weight ratio was less than 0.001% or the reaction mixture was lower than 100°C, nanoparticles were not substantially formed.

When the above-described procedures were repeated, except for changing the reaction conditions to 190°C and 40 minutes, a colloidal dispersion having an average particle size of 15 nm with a coefficient of size variation of 10% (hereinafter C-1b). When the above-described procedures were followed, except for changing the reaction conditions to 240°C and 60 minutes, there was obtained a colloidal dispersion having an average particle size of 30 nm with a coefficient of size variation of 20% (hereinafter C-1c).

It was confirmed that all the nanoparticles obtained above had TOPO adsorbed on the surface thereof from the fact that there were a given interval among the particles as observed under a high-resolving power TEM and also through chemical analyses.

### EXAMPLE 2

### Preparation of AgInTe₂ nanoparticle colloid:

InCl₃ was dissolved in TOP to prepare a 1M solution (hereinafter In-TOP). In an inert gas atmosphere 100 g of TOPO was melted by heating at 150°C, and 67 cc of In-TOP and 100 cc of Te-TOP were added thereto while vigorously stirring. The vigorous stirring was further continued for about 1 hour. Then 67 cc of AG-TOP and 34 cc of Te-TOP were added, followed by stirring for about 10 minutes (total Te mole/weight of TOPO=0.13%). The resulting nanoparticles had an average particle size of 6 nm with a variation coefficient of 7%. The particles were purified in the same manner as in Example 1. After drying, the particles were dispersed in n-hexane to prepare a 0.5 g/cc dispersion (hereinafter C-2a).

When the total Te mole number/TOPO weight ratio was 0.6% or higher, or when the reaction temperature was higher than 350°C, the particles aggregated and could not be re-dispersed.

When the above-described procedures were repeated, except for changing the reaction conditions to 200°C and 40 minutes, a colloidal dispersion having an average particle size of 14 nm with a coefficient of size variation of 12% (hereinafter C-2b). When the reaction conditions were changed to 230°C and 60 minutes, there was obtained a colloidal dispersion having an average particle size of 27 nm with a coefficient of size variation of 23% (hereinafter C-2c).

It was confirmed by the same analyses as in Example 1 that all the nanoparticles obtained above had TOPO adsorbed on the surface thereof.

### EXAMPLE 3

### Preparation of CuInTe₂ nanoparticle colloid:

CuCl and an equimolar amount of InCl₃ were dissolved in TOP to prepare a solution containing CuCl and InCl₃ in respective concentrations of 5M (hereinafter CuIn-TOP). In an inert gas atmosphere 100 g of TOPO was melted by heating to 150°C, and 100 cc of CuIn-TOP and 100 cc of Te-TOP were added thereto while vigorously stirring. The liquid temperature was raised to 250°C, at which the reaction mixture was allowed to react for about 10 minutes (Te mole number/TOPO weight=0.1%). The resulting nanoparticles had an average particle size of 12 nm, and the coefficient of size variation was 10%. The particles were purified in the same manner as in Example 1. After drying, the particles were dispersed in n-hexane to prepare a 0.5 g/cc dispersion (hereinafter C-3a). When the Te mole number/TOPO weight ratio was 1%, the particles aggregated and were not re-dispersed.

When the above-described procedures were repeated, except for changing the reaction conditions to 200°C and 40 minutes, there was obtained a colloidal dispersion having an average particle size of 18 nm with a coefficient of size variation of 14% (hereinafter C-3b). When the reaction conditions were changed to 250°C and 60 minutes, a colloidal dispersion having an average particle size of 28 nm with a coefficient of size variation of 25% (hereinafter C-3c) was obtained.

It was confirmed by the same analyses as in Example 1 that all the nanoparticles obtained above had TOPO adsorbed on the surface thereof.

### EXAMPLE 4

Each of the dispersions C-1a to -3c was applied by spin coating to a polycarbonate disk having a diameter of 120 mm and a thickness of 0.6. mm to form a recording layer having a thickness of 100 nm. An amorphous fluorine-containing resin layer (Cytop, available from Asahi Glass Co., Ltd.) was applied by spin coating to the recording layer to a thickness of 200 nm to prepare samples 1 to 9. The recording layer, a part of which was crystalline after film formation, was irradiated with laser light of 4 to 10 mW to sufficiently crystallize to present an initialized state (unrecorded state).

For comparison, samples 10 to 12 were prepared by forming an Ag₂Te, AgInTe₂ or CuInTe₂ recording layer whose composition was equivalent to C-1a to -1c, C-2a to -2c, and C-1 to -3c, respectively by sputtering on the same polycarbonate substrate as used above, and coating the recording layer with the same amorphous fluorine-containing resin as used above by spin coating to a thickness of 200 nm. The recording layers of samples 10 to 12, which were amorphous, were initialized in the same manner as for samples 1 to 9.

The recording characteristics of the samples were evaluated as follows by use of an optical disk testing drive DDU1000, supplied by Pulstec Industrial Co., Ltd. Test signals having a frequency of 4.35 MHz were recorded by irradiating the substrate side of the disk with a laser beam having a wavelength of 405 nm by using an optical pickup having a numerical aperture (NA) of 0.6 at a linear velocity of 3.5 m/sec and a duty ratio of 33%. The recording power was stepwise increased by 1 mW up to 12 mW. The recorded signals were reproduced to obtain the output at which the degree of modulation reached the maximum. The degree of modulation is a quotient obtained by dividing the amplitude of a recorded area by the signal intensity of a non-recorded area. The results obtained are shown in Table 1.

**TABLE 1**

| | Recording Layer Colloid | | | | |
|---|---|---|---|---|---|
| Sample | Recording Layer | | Average Particle Size (nm) | V.C. (%) | Minimum Output for Recording (mW) |
| 1 | C-1a | Ag₂Te | 8 | 5 | 3 |
| 2 | C-1b | | 15 | 10 | 5 |
| 3 | C-1c | | 30 | 20 | 8 |
| 4 | C-2a | AgInTe₂ | 6 | 7 | 2 |
| 5 | C-2b | | 14 | 12 | 5 |
| 6 | C-2c | | 27 | 23 | 10 |
| 7 | C-3a | CuInTe₂ | 12 | 10 | 4 |
| 8 | C-3b | | 18 | 14 | 8 |
| 9 | C-3c | | 28 | 25 | 15 |
| 10 | sputtering | Ag₂Te | - | - | 8 |
| 11 | sputtering | AgInTe₂ | - | - | 7 |
| 12 | sputtering | CuInTe₂ | - | - | 10 |
| V.C.: Coefficient of size variation | | | | | |

It is apparent from the results in Table 1 that the recording layer formed by application of the nanoparticle colloid of the present invention can be recorded with a lower output, i.e., has higher sensitivity, than that formed by sputtering.

### EXAMPLE 5

Samples 13 to 18 were prepared by building up the following layers on a 0.6 mm thick polycarbonate disk in the order listed. The recording layer was formed by applying each of the colloidal dispersions C-2a to -2c and C-3a to -3c by spin coating. The first dielectric layer, the second dielectric layer and the reflective layer were formed by sputtering. The UV-cured layer was formed by spin-coating the reflective layer with a UV-curing resin and irradiating the coating film by UV light. Layer structure (material and thickness):
First dielectric layer (ZnS/SiO₂=1/1; 80 nm)
Recording layer (20 nm)
Second dielectric layer (ZnS/SiO₂=1/1; 20 nm)
Reflective layer (aluminum; 160 nm)
UV-cured layer (200 nm)

For comparison, samples 19 and 20 were prepared in the same manner, except that the recording layer comprising AgInTe₂ or CuInTe₂ was formed by sputtering.

All the samples were sufficiently initialized with laser light.

The recording characteristics of the samples were evaluated by use of the same testing drive as used in Example 4. Test signals having a frequency of 4.35 MHz were recorded by irradiating the substrate side of the disk with a write laser beam having a wavelength of 405 nm by using an optical pickup (NA=0.6; the laser beam diameter on the disk surface: about 1 µm) at a linear velocity of 3.5 m/sec and a duty ratio of 33%. The recorded signals were reproduced with a read beam having a power of 0.7 mW. The write laser power (P_{w}) at which the C/N ratio was saturated or reached the maximum, the optimum power for erasion (P_{E}), and the erasability are shown in Table 2 below.

**TABLE 2**

| Sample | Recording Layer | | P_{W} (mW) | P_{E} (mW) | C/N (dB) | Erasability (-dB) |
|---|---|---|---|---|---|---|
| 13 | C-2a | AgInTe₂ | 6 | 3 | 45 | 39 |
| 14 | C-2b | | 9 | 5 | 43 | 36 |
| 15 | C-2c | | 16 | 9 | 39 | 33 |
| 16 | C-3a | CuInTe₂ | 10 | 4 | 43 | 38 |
| 17 | C-3b | | 16 | 10 | 42 | 35 |
| 18 | C-3c | | 30 | 19 | 34 | 30 |
| 19 | sputtering | AgInTe₂ | 15 | 9 | 39 | 35 |
| 20 | sputtering | CuInTe₂ | 28 | 16 | 38 | 33 |

The results in Table 2 prove that all the tested samples according to the present invention need very small power in writing and reading and achieve a satisfactory C/N ratio and a satisfactory erasability.

A one-beam overwrite test was conducted on the samples 13, 14, 16 and 17, in which the recording medium was repeatedly recorded at two alternating frequencies (f1=4.35 MHz; f2=5.1 MHz). After overwriting 1000 times, the C/N ratio and the erasability were measured. The results obtained are shown in Table 3.

**TABLE 3**

| Sample | Recording Layer | | C/N (dB) | Erasability (-dB) |
|---|---|---|---|---|
| 13 | C-2a C-2b | AgInTe₂ | 43 | 38 |
| 14 | | | 42 | 35 |
| 16 | C-3a C-3b | CuInTe₂ | 42 | 37 |
| 17 | | | 40 | 33 |

It is seen that every sample tested keeps satisfactory levels of C/N ratio and erasability while showing somewhat reductions due to repeated overwriting.

The present invention has accomplished high-density recording with short wavelength laser light of 600 nm or less that could not be effected without difficulty. The invention provides a rewritable optical recording medium having a recording layer comprising nanoparticles and thereby exhibiting extremely improved sensitivity.

The entire disclosure of each and every foreign patent application from which the benefit of foreign priority has been claimed in the present application is incorporated herein by reference, as if fully set forth herein.

## Claims

1. An optical recording medium comprising a recording layer containing, as a photoresponsive material, metal chalcogenide nanoparticles, wherein the metal chalcogenide nanoparticles have an average particle size of 1 to 20 nm and have a surface modified with an adsorbable compound.

2. The optical recording medium according to claim 1, wherein the recording layer is a layer formed by preparing the metal chalcogenide nanoparticles as a colloidal dispersion by a chemical synthesis, and applying the colloidal dispersion.

3. The optical recording medium according to claim 1, wherein the metal chalcogenide nanoparticles comprise: at least one element selected from the elements of the groups 8, 1B and 2B and the 4th to 6th periods of the groups 3B, 4B and 5B of the Periodic Table; and at least one element selected from the elements consisting of the group 6B of the Periodic Table.

4. The optical recording medium according to claim 2, wherein the colloidal dispersion is prepared by the steps of:
(1) mixing a precursor solution containing: at least one element selected from the elements of the groups 8, 1B and 2B and the 4th to 6th periods of the groups 3B, 4B and 5B of the Periodic Table; and a precursor solution containing at least one element selected from the elements of the group 6B of the Periodic Table, in a high-boiling organic solvent at 100 to 350°C in an inert gas atmosphere, so as to react the precursors to form a reaction mixture including nanoparticles;
(2) adding a flocculant to the reaction mixture obtained in step (1) to aggregate and precipitate the nanoparticles, and separating the precipitated nanoparticles from a supernatant liquor in the resulting reaction mixture;
(3) re-dispersing the precipitated nanoparticles collected in step (2) in an organic solvent; and
(4) repeating the precipitation and re-dispersion to remove a precursor-forming organic matter and the high-boiling organic solvent while holding the high-boiling organic solvent adsorbed to the nanoparticles to such an extent that the precipitated nanoparticles can be re-dispersed in an organic solvent.

5. The optical recording medium according to claim 1, wherein the nanoparticles are crystalline.

6. The optical recording medium according to claim 1, which comprises a substrate, a first dielectric protective layer, the recording layer, and a second dielectric protective layer in this order.

7. The optical recording medium according to claim 1, which is of rewritable type capable of recording, reproducing and erasing information through changes in reflectance of the recording layer, which are made by irradiating the nanoparticles with first light energy to make them amorphous and by irradiating the nanoparticles with second light energy that is smaller than the first light energy to make them crystalline.

8. The optical recording medium according to claim 1, which is of write once type capable of recording information through a change in reflectance of the recording layer, which is made by an irreversible phase change caused in at least one of the nanoparticles and the vicinities thereof by giving light energy.

9. The optical recording medium according to claim 1, wherein the metal chalcogenide nanoparticles are mono-dispersed particles.

10. The optical recording medium according to claim 1, wherein the adsorbable compound is at least one selected from the group consisting of alkylphosphine oxides, alkylphosphines, and compounds containing -SH, -CN, -NH₂, -SO₂OH, -SOOH, -OPO(OH)₂ or -COOH.

11. The optical recording medium according to claim 4, wherein the total number of moles of the element of group 6B is 0.001% to 0.5% based on the weight of the high-boiling organic solvent.

12. The optical recording medium according to claim 4, wherein the high-boiling organic solvent is trioctylphosphine oxide (TOPO).

13. A method of optical recording comprising irradiating the optical recording medium according to claim 1 with a semiconductor laser beam having an oscillation wavelength ranging from 200 to 600 nm.
